# EUROPEAN PATENT APPLICATION

(11) **EP 4 650 744 A1**
(43) Date of publication of application: **19.11.2025**
(21) Application number: 23916089.8
(22) Date of filing: 19.09.2023
(51) Int. Cl.: G01M 17/007

(54) **VEHICLE TEST DEVICE AND OPERATION CONTROL METHOD FOR VEHICLE TEST DEVICE**

(30) Priority: 12.01.2023 JP 2023003129
(71) Applicant: TMEIC Corporation, Tokyo 104-0031 (JP)
(72) Inventor: URATA Yohei, Tokyo 104-0031 (JP); KUWAHARA Atsushi, Tokyo 104-0031 (JP); OHTSUKA Junji, Tokyo 104-0031 (JP); KOTOO Kohsuke, Tokyo 104-0031 (JP); SUWA Yuta, Tokyo 104-0031 (JP)
(74) Representative: TBK
(86) International application number: PCT/JP2023/033926
(87) International publication number: WO 2024/150469

(57) **Abstract**

This disclosure has an object of obtaining a vehicle testing apparatus such as a chassis dynamometer, which does not require advanced preparation on a tire turning angle and can recognize an angular displacement with high accuracy. A displacement sensor (7L, 7R) according to the disclosure detects a tire turning angle of a tire (6L, 6R), using a distance measurement region (90) in the tire (6L, 6R) as a detection target to obtain angle measurement information (S7L, S7R). A controller (15) receives the angle measurement information (S7L, S7R) from the displacement sensor (7L, 7R), determines a steering angle corresponding to the tire turning angle indicated by the angle measurement information (S7L, S7R), and outputs steering angle instruction information (SG) indicating the determined steering angle to a motor drive (19). The motor drive (19) drives a rotation motor (42) of a roller rotation mechanism (3L, 3R) according to the steering angle instruction information (SG).

## Description

### TECHNICAL FIELD

The present disclosure relates to a vehicle testing apparatus such as a chassis dynamometer to be used in various driving tests on vehicles, and a method of controlling an operation of the vehicle testing apparatus.

### BACKGROUND ART

Chassis dynamometers as one type of vehicle testing apparatuses have conventionally been used in driving tests on vehicles (automobiles), and each include roller devices as main constituent elements.

Since various driving tests involving steering operations in vehicles require roller rotation operations of rotating the rollers to be adapted to operations of rotating tires, each of the chassis dynamometers further includes rotation mechanisms for executing the roller rotation operations. Examples of the conventional chassis dynamometer with the rotation mechanisms include the chassis dynamometer disclosed in Patent Document 1.

Specifically, the roller rotation operations are necessary to implement a control method for causing the roller devices for right and left tires to follow a tire turning angle in a steering operation. The control method is applicable to automated driving or ADAS simulation driving tests. "ADAS" denotes an advanced driver assistance system, and is a system that detects, for example, the possibility of accidents in advance and avoids the accidents.

As described above, the conventional chassis dynamometers each further include roller rotation mechanisms that execute the roller rotation operations to perform the various driving tests involving steering operations in vehicles. The chassis dynamometer disclosed in Patent Document 1 includes the roller rotation mechanisms.

### PRIOR ART DOCUMENT

### PATENT DOCUMENT

Patent Document 1: Japanese Patent Application Laid-Open No. 2019-203869

### SUMMARY

### PROBLEM TO BE SOLVED BY THE INVENTION

The conventional vehicle testing apparatuses represented by the chassis dynamometers, however, each have indirectly recognized a tire turning angle that is a steering angle of tires with reference to a steering angle conversion table, based on steering wheel angle information (indicating "a steering wheel turning angle") obtained from an encoder attached to a steering wheel of a vehicle. The steering angle conversion table generally has angle pair information of multiple types indicating tire turning angles of multiple types, in a format corresponding to steering wheel turning angles of multiple types.

The details of the steering angle conversion table differ for each vehicle. Each time a vehicle to be tested is changed, a steering angle conversion table for the vehicle to be tested needs to be prepared as information on tire turning angles. Thus, the advanced preparation taking time and trouble is a problem.

In addition, the conventional vehicle testing apparatuses represented by the chassis dynamometers each indirectly determine a tire turning angle based on a steering wheel turning angle. Thus, low recognition accuracy of the tire turning angle is a problem.

This disclosure has been conceived to solve the problems, and has an object of obtaining a vehicle testing apparatus that does not require advanced preparation on a tire turning angle and can recognize the tire turning angle with high accuracy.

### MEANS TO SOLVE THE PROBLEM

A vehicle testing apparatus according to the present disclosure includes: a roller on which a tire of a vehicle is placed; a roller rotation mechanism executing a roller rotation operation of rotating a rotation object set including the roller; and a displacement sensor detecting an angular displacement on a tire turning angle, using a measurement target region in the tire as a detection target to obtain angle measurement information, the tire turning angle being an angle with respect to a reference direction of the tire.

### EFFECTS OF THE INVENTION

The displacement sensor in the vehicle testing apparatus according to the present disclosure uses the measurement target region in the tire as the detection target. Thus, the displacement sensor can determine the angular displacement on the tire turning angle with high accuracy.

In addition, even when a vehicle to be tested is changed, the vehicle testing apparatus according to the present disclosure need not prepare new information on a tire turning angle of the vehicle in advance by using a measurement target region in a tire as a detection target.

Thus, the vehicle testing apparatus according to the present disclosure does not require advanced preparation on the tire turning angle and can recognize the angular displacement with high accuracy.

The objects, features, aspects, and advantages of the present disclosure will become more apparent from the following detailed description and the accompanying drawings.

### BRIEF DESCRIPTION OF DRAWINGS

FIG. 1 is a perspective view schematically illustrating a structure of a chassis dynamometer according to Embodiment 1 on which a vehicle has been placed.
FIG. 2 schematically illustrates displacement sensors and its periphery in the chassis dynamometer according to Embodiment 1.
FIG. 3 schematically illustrates a cross section A-A in FIG. 2.
FIG. 4 schematically illustrates a structure of a roller rotation mechanism.
FIG. 5 schematically illustrates elements of a distance measurement region in a tire.
FIG. 6 is a flowchart illustrating a method of obtaining angle measurement information by a displacement sensor according to Embodiment 1.
FIG. 7 schematically illustrates a drive system of a rotation motor in the chassis dynamometer according to Embodiment 1.
FIG. 8 is a flowchart illustrating a procedure of a method of controlling a rotation by the roller rotation mechanism according to Embodiment 1.
FIG. 9 schematically illustrates displacement sensors and its periphery in a chassis dynamometer according to Embodiment 2.
FIG. 10 is a flowchart illustrating a method of obtaining the angle measurement information by a displacement sensor according to Embodiment 2.
FIG. 11 schematically illustrates a drive system of a rotation motor in the chassis dynamometer according to Embodiment 2.
FIG. 12 is a flowchart illustrating a procedure of a method of controlling a rotation by a roller rotation mechanism according to Embodiment 2.
FIG. 13 schematically illustrates a planar structure of a chassis dynamometer according to Embodiment 3.
FIG. 14 is a front view illustrating a structure of a lateral transfer mechanism according to Embodiment 3.
FIG. 15 is a top view of the lateral transfer mechanism in FIG. 14 when viewed from above.
FIG. 16 schematically illustrates a drive system of various motors in the chassis dynamometer according to Embodiment 3.
FIG. 17 is a flowchart illustrating a procedure of centering alignment processing in the chassis dynamometer according to Embodiment 3.

### DESCRIPTION OF EMBODIMENTS

### [Embodiment 1]

### [Overall structure]

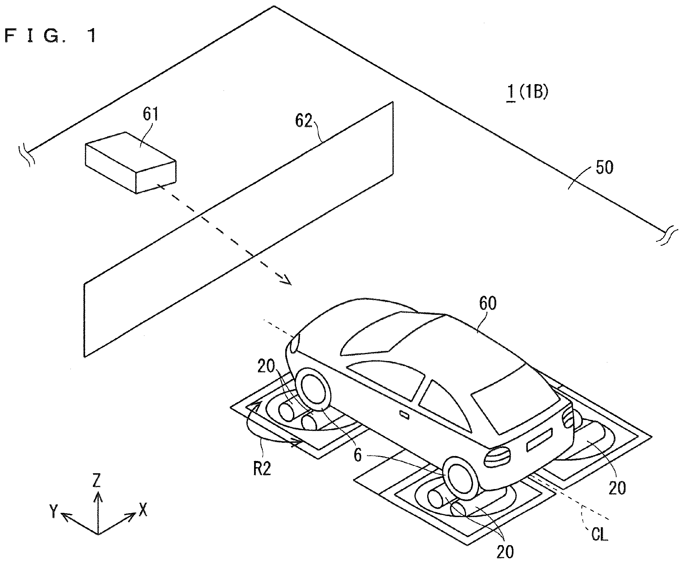

FIG. 1 is a perspective view schematically illustrating a structure of a chassis dynamometer 1 according to Embodiment 1 on which a vehicle 60 has been placed. FIG. 1 illustrates an XYZ rectangular coordinate system. In Embodiment 1, the chassis dynamometer 1 is used as a vehicle testing apparatus.

As illustrated in FIG. 1, four tires 6 of the vehicle 60 are placed on roller pairs 20 of four roller devices 2. Each of the roller devices 2 includes the roller pair 20 on which the tire 6 of the vehicle 60 is placed. When the vehicle 60 is tested, a vehicle immobilizer that is not illustrated secures the vehicle 60 placed on the roller pairs 20 of the four roller devices 2.

A rectangular image simulator 62 with a long direction in the X direction and with a short direction in the Z direction is disposed ahead of the vehicle 60 (in the +Y direction) on a floor 50. The image simulator 62, which is a simulation auxiliary component, has a display function of displaying all views visually recognizable from the vehicle 60.

Furthermore, the vehicle 60 may include an external sensor that is not illustrated. Conceivable examples of the external sensor include a radar and a lidar (LiDAR) to be used in a corner sensor, and a side camera (an electronic side mirror).

The chassis dynamometer 1 receives information on the vehicle 60 from the external sensor as necessary using, for example, angle measurement information on the tires 6 of the vehicle 60 or the image simulator 62 as necessary, and performs driving tests on the vehicle 60. The driving tests include a test involving tire rotation operations of rotating the tires 6 of the vehicle 60, and roller rotation operations of rotating the roller pairs 20 concurrently with the tire rotation operations.

### [Definition of terms on vehicle 60]

In this Description, the tires 6 of the vehicle 60 are classified into first-type tires and second-type tires. In Embodiments to be described below, of front-wheel tires and rear-wheel tires of the four tires 6 of the vehicle 60, the front-wheel tires are defined as the first-type tires, and the rear-wheel tires are defined as the second-type tires.

Thus, the first-type tires include a first-type left tire and a first-type right tire that are disposed at both sides. The first-type left tire is a front-wheel tire 6L, and the first-type right tire is a front-wheel tire 6R.

Similarly, the second-type tires include a second-type left tire and a second-type right tire that are disposed at both sides. The second-type left tire is a rear-wheel tire 6L, and the second-type right tire is a rear-wheel tire 6R.

The four rollers are classified into first-type left rollers on which a front-wheel left tire that is the first-type left tire is placed, first-type right rollers on which a front-wheel right tire that is the first-type right tire is placed, second-type left rollers on which a rear-wheel left tire that is the second-type left tire is placed, and second-type right rollers on which a rear-wheel right tire that is the second-type right tire is placed.

### [Structure of characteristic portions]

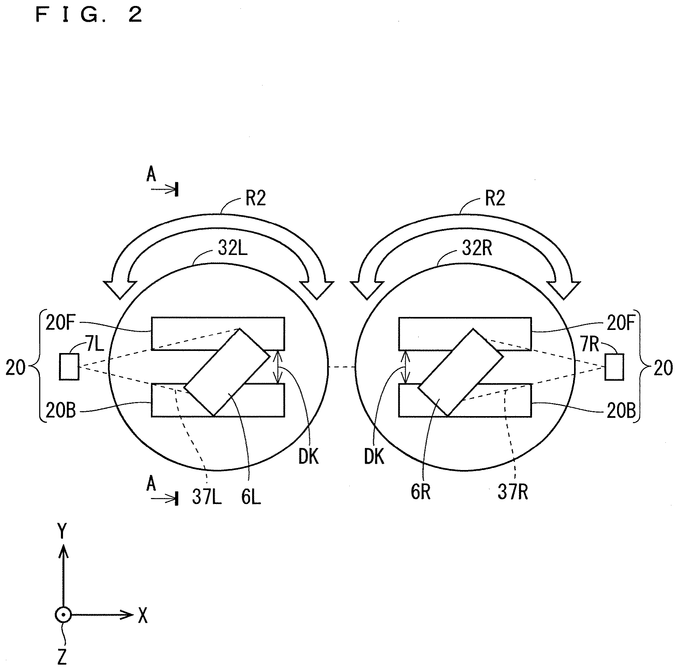

FIG. 2 schematically illustrates displacement sensors 7 and its periphery in the chassis dynamometer 1 according to Embodiment 1. FIG. 2 illustrates the XYZ rectangular coordinate system. A roller rotation mechanism 3L (a left rotation mechanism) with a rotating platform 32L executes a left roller rotation operation of rotating the roller pair 20 of the first-type left rollers (a front roller 20F + a rear roller 20B) as a left rotation object set along a roller rotation direction R2. The rotating platform 32L rotates in the roller rotation direction R2 in the left roller rotation operation.

Similarly, a roller rotation mechanism 3R (a right rotation mechanism) with a rotating platform 32R executes a right roller rotation operation of rotating the roller pair 20 of the first-type right rollers (the front roller 20F + the rear roller 20B) as a right rotation object set along the roller rotation direction R2. The rotating platform 32R rotates in the roller rotation direction R2 in the right roller rotation operation.

FIG. 2 illustrates that the tire 6L that is the first-type left tire is placed on the first-type left rollers and the tire 6R that is the first-type right tire is placed on the first-type right rollers.

The displacement sensor 7L that is a left displacement sensor detects a tire turning angle that is an angle (steering angle) with respect to a fixed reference direction (a forward and backward direction; Y direction) of the tire 6L, using a distance measurement region 90 in the tire 6L to be described later as a detection target to obtain angle measurement information S7L. The angle measurement information S7L indicates the tire turning angle detected by the displacement sensor 7L as an angular displacement. A tire angle detection range 37L indicates a detection range of the displacement sensor 7L.

Similarly, the displacement sensor 7R that is a right displacement sensor detects a tire turning angle that is an angle with respect to a fixed reference direction of the tire 6R, using the distance measurement region 90 in the tire 6R as a detection target to obtain angle measurement information S7R. The angle measurement information S7R indicates the tire turning angle detected by the displacement sensor 7R as an angular displacement. A tire angle detection range 37R indicates a detection range of the displacement sensor 7R.

The fixed reference directions of the tires 6 according to Embodiment 1 are not changed according to roller rotation operations. As such, the fixed reference directions are used as reference directions for the tire turning angles in Embodiment 1.

The displacement sensor 7L is fixedly disposed in an external region of the rotating platform 32L, and the displacement sensor 7R is fixedly disposed in an external region of the rotating platform 32R. In other words, the displacement sensor 7L is not included as the left rotation object set because the displacement sensor 7L is fixedly disposed in a non-moving position when the left rotation mechanism executes the left roller rotation operation. Similarly, the displacement sensor 7R is not included as the right rotation object set because the displacement sensor 7R is fixedly disposed in a non-moving position when the right rotation mechanism executes the right roller rotation operation.

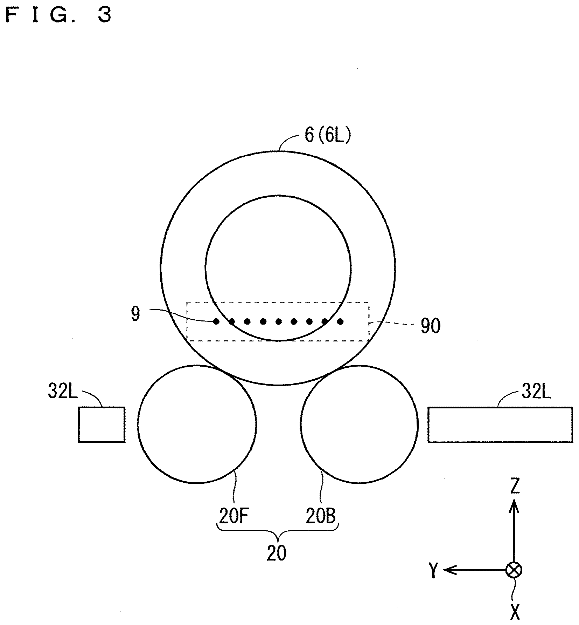

FIG. 3 schematically illustrates a cross section A-A in FIG. 2. FIG. 3 illustrates the XYZ rectangular coordinate system. As illustrated in FIG. 3, the tire 6 (tire 6L) includes the distance measurement region 90 downward as a measurement target region, and the distance measurement region 90 includes a plurality of measurement points 9 along a linear direction (the Y direction in FIG. 3). The plurality of measurement points 9 have features recognizable by the displacement sensor 7. Conceivable examples of the features recognizable by the displacement sensor 7 include various shapes such as a protrusion.

The displacement sensor 7 (the displacement sensor 7L) has a distance detection function of detecting a plurality of (sensor-to-tire) measurement distances from (a detection point of) the displacement sensor 7 to the plurality of measurement points 9 to obtain distance information.

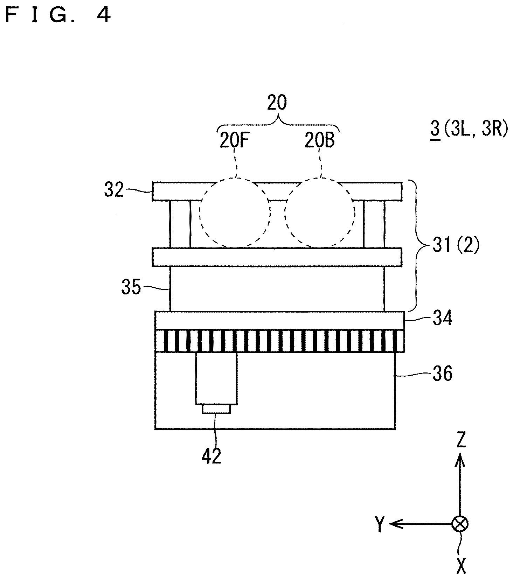

FIG. 4 schematically illustrates a structure of the roller rotation mechanism 3. The roller rotation mechanism 3 in FIG. 4 has a structure common to the left rotation mechanism (the roller rotation mechanism 3L) and the right rotation mechanism (the roller rotation mechanism 3R).

The roller rotation mechanism 3 includes, as main constituent elements, a rotation structure 31 (the roller device 2), a rotation bearing 34, a base 36, and a rotation motor 42. The rotation structure 31 includes a rotating platform 32 and a rotating bed 35, and is integrated with the roller device 2 including the roller pair 20.

The rotation motor 42 is a motor with gears that can control a speed. The gears are attached to the end of the rotation motor 42 to be engaged in gears attached around the outer periphery of the base 36. Thus, rotating the rotation motor 42 can rotate the rotating bed 35.

The rotation bearing 34 rotatably supports the rotating bed 35, and rotates the rotating bed 35 with the power of the rotation motor 42, using the center of the rotation bearing 34 as a pivot. Rotation of the rotating bed 35 rotates the rotation structure 31. As such, the roller rotation mechanism 3 includes the rotation structure 31 rotated by the rotation motor 42.

Hereinafter, the displacement sensors 7L and 7R may be collectively simply referred to as "the displacement sensor 7", and the angle measurement information S7L and the angle measurement information S7R may be collectively simply referred to as "angle measurement information S7".

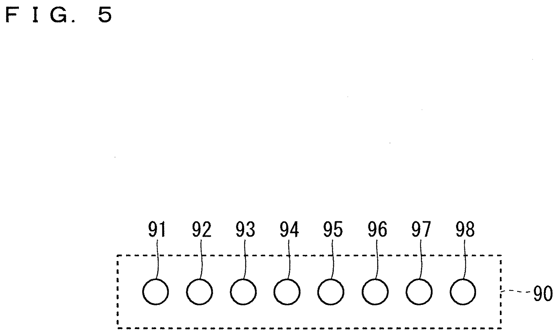

FIG. 5 schematically illustrates elements of the distance measurement region 90 (measurement target region) in the tire 6. As illustrated in FIG. 5, the distance measurement region 90 includes eight measurement points 91 to 98 as the plurality of measurement points 9. The eight measurement points 91 to 98 are examples of the measurement points. Obviously, the number of the measurement points is not limited to eight.

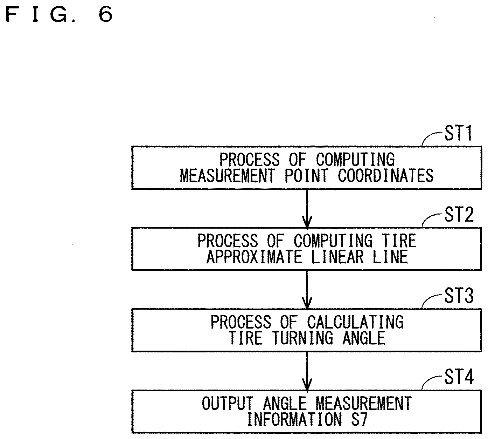

FIG. 6 is a flowchart illustrating a method of obtaining the angle measurement information S7 by the displacement sensor 7. Hereinafter, details of obtaining the angle measurement information S7 will be described with reference to FIGS. 5 and 6.

In Step ST1, first, a process of computing measurement point coordinates is executed. The process of computing measurement point coordinates includes partial Steps ST1-1 and ST1-2 below.

Step ST1-1 is a partial step of obtaining distances from the displacement sensor 7 to the measurement points 91 to 98 as measurement distances L91 to L98, respectively. The displacement sensor 7 detects distances from the displacement sensor 7 to the measurement points 91 to 98 to obtain the measurement distances L91 to L98, respectively. As such, the displacement sensor 7 has the distance detection function of obtaining the plurality of measurement distances (the measurement distances L91 to L98) from the displacement sensor 7 to the plurality of measurement points (the measurement points 91 to 98).

Step ST1-2 is a partial step of obtaining, as measurement coordinates C91 to C98, coordinate positions of the measurement points 91 to 98 on the horizon plane (an XY plane) from the measurement distances L91 to L98, respectively.

Execution of the process of computing measurement point coordinates (ST1) including the partial steps ST1-1 and ST1-2 can obtain, as a plurality of measurement coordinates, the measurement coordinates C91 to C98 at the measurement points 91 to 98 that are a plurality of measurement points.

Next in Step ST2, a tire approximate linear line that is a regression line obtained as a linear function is determined based on the measurement coordinates C91 to C98 each indicating the coordinate position and obtained in Step ST1. This tire approximate linear line is a straight line indicating the direction of the tire 6.

Then, in Step ST3, the tire turning angle is obtained from an angle formed between a reference direction prepared in advance and the tire approximate linear line. The reference direction in Embodiment 1 is the fixed reference direction indicating, for example, the forward direction (Y direction) that is the forward and backward direction of the vehicle 60.

Then in Step ST4, the displacement sensor 7 outputs the angle measurement information S7 indicating the tire turning angle calculated in Step ST3. In other words, the angle measurement information S7 indicates the tire turning angle as an angular displacement.

As such, the chassis dynamometer 1 according to Embodiment 1 can determine the tire turning angle that is the angular displacement, with the distance measurement region 90 (measurement target region) in the tire 6 as a detection target using the displacement sensor 7 having the distance detection function.

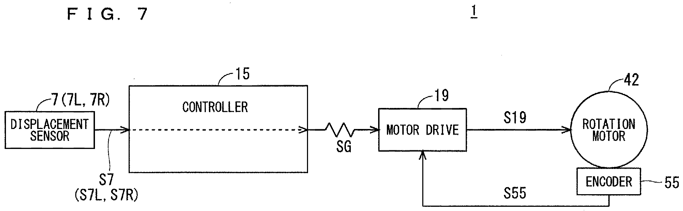

FIG. 7 schematically illustrates a drive system of the rotation motor 42 in the chassis dynamometer 1 according to Embodiment 1.

As illustrated in FIG. 7, the chassis dynamometer 1 further includes a controller 15 that is a roller rotation controller, a motor drive 19, and an encoder 55. The rotation motor 42 in FIG. 7 is a motor to be used for each of the roller rotation mechanisms 3L and 3R.

As illustrated in FIG. 7, the controller 15 receives the angle measurement information S7 from the displacement sensor 7, and determines a steering angle corresponding to the tire turning angle indicated by the angle measurement information S7. Then, the controller 15 outputs steering angle instruction information SG indicating the determined steering angle to the motor drive 19. The motor drive 19 outputs, to the rotation motor 42, a driving control signal S19 indicating a roller rotation operation at a rotation angle corresponding to the steering angle indicated by the steering angle instruction information SG. The motor drive 19 receives encoder information S55 as a feedback signal from the encoder 55. The encoder information S55 includes a measurement value of a rotation angle of the rotation structure 31 with respect to the reference direction.

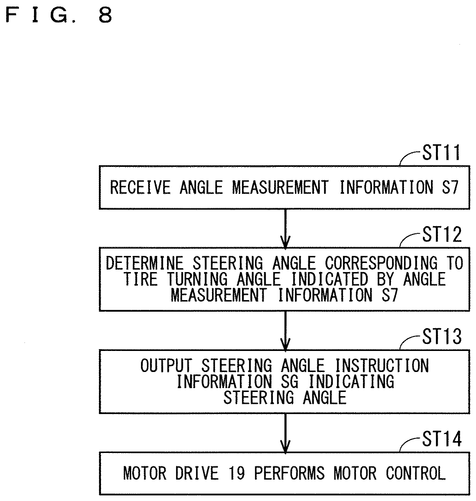

FIG. 8 is a flowchart illustrating a procedure of a method of controlling a rotation of the roller rotation mechanism 3 under control of the controller 15 in the drive system in FIG. 7. Embodiment 1 describes the method of controlling the rotation of the roller rotation mechanism 3 in FIG. 8 as a method of controlling an operation of the vehicle testing apparatus.

With reference to FIG. 8, the controller 15 receives the angle measurement information S7 from the displacement sensor 7 that is a fixed displacement sensor in Step ST11, and determines a steering angle corresponding to the tire turning angle indicated by the angle measurement information S7. The angle measurement information S7 indicating the tire turning angle except "0" means that the steering process on the vehicle 60 rotates the tires 6.

Then in Step ST12, the controller 15 outputs the steering angle instruction information SG indicating the steering angle determined in Step ST11 to the motor drive 19.

Next in Step ST13, the motor drive 19 performs motor control of outputting the driving control signal S19 to the rotation motor 42 to cause the roller rotation mechanism 3 to execute the roller rotation operation.

Here, the roller rotation mechanism 3 executes the roller rotation operation so that the rotation structure 31 rotates at the rotation angle corresponding to the steering angle indicated by the steering angle instruction information SG. Thus, the rotation angle of the rotation structure 31 in executing the roller rotation operation in Embodiment 1 is an absolute rotation angle with respect to a fixed reference direction.

As such, the controller 15 that is the roller rotation controller executes the rotation control processes for performing the method of controlling the rotation in FIG. 8. These rotation control processes are processes for causing the roller rotation mechanism 3 to perform the roller rotation operation so that a geometry between the roller pair 20 and the tire 6 is maintained constant without being angularly deviated.

For example, when the steering operation of the vehicle 60 rotates the tire 6 at a tire turning angle A6, rotating the rotation structure 31 at the absolute rotation angle identical to the tire turning angle A6 indicated by the angle measurement information S7 maintains the geometry between the roller pair 20 and the tire 6 constant which has been established before formation of the tire turning angle A6. The tire turning angle A6 includes a rotation direction.

Specifically, the roller rotation mechanism 3 executes the roller rotation operation so that a rotation reference direction DK defined for the roller pair 20 always matches the tire approximate linear line for the tire 6. Conceivable examples of the rotation reference direction DK include a facing direction between the front roller 20F and the rear roller 20B in the rotating platform 32 as illustrated in FIG. 2.

Since the distance measurement region 90 (measurement target region) in the tire 6 is a detection target for each of the displacement sensors 7 (the displacement sensor 7L + displacement sensor 7R) in the chassis dynamometer 1 according to Embodiment 1, the displacement sensor 7 can determine the tire turning angle with respect to the fixed reference direction (Y direction) as an angular displacement with high accuracy.

In addition, the distance measurement region 90 in the tire 6 is a detection target in the chassis dynamometer 1 according to Embodiment 1. Even when the vehicle 60 to be tested is changed, new information on the tire turning angle of the changed vehicle 60 need not be prepared in advance.

A necessary process is only setting, in the tire 6 of the changed vehicle 60, the distance measurement region 90 in which the distance detection function of the displacement sensor 7 is available. Thus, information on the tire turning angle such as the steering angle conversion table conventionally used is unnecessary. Consequently, the chassis dynamometer 1 according to Embodiment 1 is not subject to any constraint or limitation on vehicle models of the vehicle 60 to be tested.

As such, the chassis dynamometer 1 according to Embodiment 1 does not require advanced preparation on the tire turning angle and can recognize the tire turning angle as an angular displacement with high accuracy.

In the chassis dynamometer 1 according to Embodiment 1, the displacement sensor 7 that is a fixed displacement sensor is fixedly disposed outside the rotating platform 32 in a non-moving position when the roller rotation mechanism 3 executes the roller rotation operation. Thus, the tire turning angle can be directly recognized from the angle measurement information S7.

The chassis dynamometer 1 according to Embodiment 1 can cause the roller rotation mechanism 3 to perform the roller rotation operation in synchronization with the tire turning angle (angular displacement) with high accuracy, through the rotation control processes by the controller 15 that is the roller rotation controller based on the angle measurement information S7 obtained from the displacement sensor 7 so that the geometry between the roller pair 20 and the tire 6 is maintained constant without being angularly deviated.

Thus, the chassis dynamometer 1 according to Embodiment 1 can cause the roller rotation mechanism 3 to perform the roller rotation operation of rotating the roller pair 20 at the (absolute) rotation angle identical to the tire turning angle indicated by the angle measurement information S7 with high accuracy, through the rotation control processes by the controller 15.

The chassis dynamometer 1 according to Embodiment 1 executes the method of obtaining the angle measurement information S7 in FIG. 6 as a process of computing an angular displacement. The method of obtaining the angle measurement information S7 includes Steps ST1 to ST4.

The chassis dynamometer 1 according to Embodiment 1 causes the displacement sensor 7 having the distance detection function to execute the process of computing the angular displacement (processes of obtaining the angle measurement information S7) in FIG. 6, so that the tire turning angle can be determined as an angular displacement with high accuracy.

Furthermore, the displacement sensor 7 having the distance detection function can measure a distance to the tire 6 having the distance measurement region 90, without any special computing process.

As illustrated in FIG. 8, the chassis dynamometer 1 according to Embodiment 1 executes Steps ST11 to ST14 as the method of controlling the rotation of the roller rotation mechanism 3 (the method of controlling the operation of the vehicle testing apparatus). Thus, always maintaining the geometry between the roller pair 20 and the tire 6 constant without being angularly deviated in the test of the vehicle 60 which involves the tire rotation operation of rotating the tire 6 enables the vehicle 60 to be tested with high accuracy.

Although the displacement sensor 7 in the chassis dynamometer 1 according to Embodiment 1 executes Steps ST1 to ST4 in FIG. 6 so that the angle measurement information S7 indicates the tire turning angle as a basic aspect, the following modification is conceivable.

In the modification, the process to be performed by the displacement sensor 7 is limited to partial Step ST1-1 in Step ST1. Here, the angle measurement information S7 indicates the measurement distances L91 to L98.

In the modification, the controller 15 executes partial Step ST1-2 in Step ST1, and Steps ST2 to ST4 in FIG. 6 based on the measurement distances L91 to L98 indicated by the angle measurement information S7 to determine the tire turning angle, and then executes Steps ST12 and ST13 in FIG. 8.

As such, examples of the conceivable modification of Embodiment 1 include a structure in which process details of the displacement sensor 7 are kept to a minimum and functions of the controller 15 have been extended.

### [Embodiment 2]

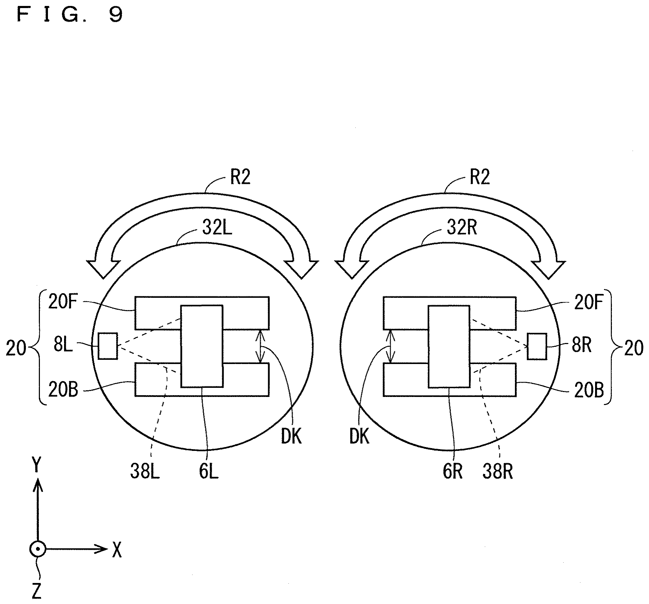

FIG. 9 schematically illustrates displacement sensors 8 and its periphery in a chassis dynamometer 1B according to Embodiment 2. FIG. 9 illustrates the XYZ rectangular coordinate system. In Embodiment 2, the chassis dynamometer 1B is used as a vehicle testing apparatus.

The chassis dynamometer 1B according to Embodiment 2 has the same structure as that of the chassis dynamometer 1 according to Embodiment 1, except, for example, replacement of the displacement sensors 7 with the displacement sensors 8 and change from the controller 15 to a controller 15B as will be described later.

The same reference numerals are assigned to the same constituent elements as those of the chassis dynamometer 1 according to Embodiment 1, and the description is appropriately omitted. Hereinafter, characteristic portions of the chassis dynamometer 1B according to Embodiment 2 will be mainly described.

FIG. 9 illustrates that the tire 6L that is the first-type left tire is placed on the first-type left rollers and the tire 6R that is the first-type right tire is placed on the first-type right rollers, similarly to Embodiment 1.

Each of the tires 6L and 6R includes the distance measurement region 90 as a measurement target region in the chassis dynamometer 1B according to Embodiment 2, similarly to Embodiment 1.

A displacement sensor 8L that is a left displacement sensor detects a roller-tire angular deviation that is an angular deviation in the geometry between the roller pair 20 as the first-type left rollers (the front roller 20F + the rear roller 20B) and the tire 6L, using the distance measurement region 90 in the tire 6L as a detection target to obtain angle measurement information S8L indicating the roller-tire angular deviation. The angle measurement information S8L indicates the roller-tire angular deviation detected by the displacement sensor 8L as an angular displacement. A tire angle detection range 38L indicates a detection range of the displacement sensor 8L.

Similarly, a displacement sensor 8R that is a right displacement sensor detects a roller-tire angular deviation between the roller pair 20 as the first-type right rollers and the tire 6R, using the distance measurement region 90 in the tire 6R as a detection target to obtain angle measurement information S8R indicating the roller-tire angular deviation. The angle measurement information S8R indicates the roller-tire angular deviation detected by the displacement sensor 8R as an angular displacement. A tire angle detection range 38R indicates a detection range of the displacement sensor 8R.

The displacement sensor 8L is disposed on the rotating platform 32L, whereas the displacement sensor 8R is disposed on the rotating platform 32R. In other words, the displacement sensor 8L rotates together with the roller pair 20 as the first-type left rollers through the left roller rotation operations by the roller rotation mechanism 3L (the left rotation mechanism), whereas the displacement sensor 8R rotates together with the roller pair 20 as the first-type right rollers through the right roller rotation operations by the roller rotation mechanism 3R (the right rotation mechanism).

Thus, the left rotation object set of the roller rotation mechanism 3L includes the first-type left rollers and the displacement sensor 8L, whereas the right rotation object set of the roller rotation mechanism 3R includes the first-type right rollers and the displacement sensor 8R.

Thus, the chassis dynamometer 1B according to Embodiment 2 includes the first-type left rollers and the displacement sensor 8L as the left rotation object set, and the first-type right rollers and the displacement sensor 8R as the right rotation object set.

The displacement sensor 8L has the distance detection function of detecting a plurality of measurement distances from (a detection point of) the displacement sensor 8L to the plurality of measurement points 9 in the distance measurement region 90 of the tire 6L to obtain distance information.

Similarly, the displacement sensor 8R has the distance detection function of detecting a plurality of measurement distances from (a detection point of) the displacement sensor 8R to the plurality of measurement points 9 in the distance measurement region 90 of the tire 6R to obtain distance information.

Hereinafter, the displacement sensors 8L and 8R may be collectively simply referred to as the "displacement sensor 8", and the angle measurement information S8L and the angle measurement information S8R may be collectively simply referred to as "angle measurement information S8".

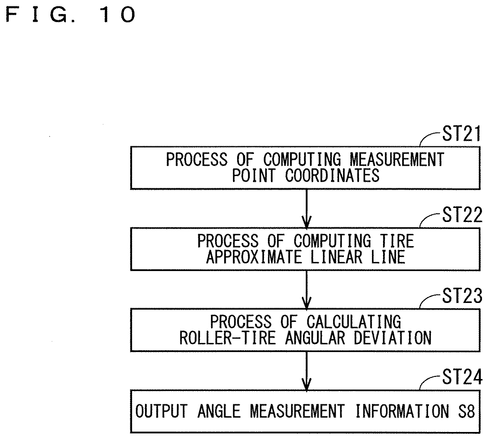

FIG. 10 is a flowchart illustrating a method of obtaining the angle measurement information S8 by the displacement sensor 8. The distance measurement region 90 in the tire 6 is the region illustrated in FIG. 6, similarly to Embodiment 1. Hereinafter, details of obtaining the angle measurement information S8 will be described with reference to FIGS. 6 and 10.

In Step ST21, first, a process of computing measurement point coordinates is executed. The process of computing measurement point coordinates includes partial Steps ST21-1 and ST21-2 below.

Step ST21-1 is a partial step of obtaining distances from the displacement sensor 8 to the measurement points 91 to 98 as the measurement distances L91 to L98, respectively. The displacement sensor 8 detects the distances to the measurement points 91 to 98 to obtain the measurement distances L91 to L98, respectively. As such, the displacement sensor 8 has the distance detection function of detecting the plurality of measurement distances (the measurement distances L91 to L98) to the plurality of measurement points (the measurement points 91 to 98). The distance information obtained from the displacement sensor 8 indicates the measurement distances L91 to L98.

Step ST21-2 is a partial step of obtaining, as measurement coordinates C91 to C98, coordinate positions of the measurement points 91 to 98 on the XY plane from the measurement distances L91 to L98, respectively.

Execution of the process of computing measurement point coordinates (ST21) including partial steps ST21-1 and ST21-2 can obtain, as a plurality of measurement coordinates, the measurement coordinates C91 to C98 at the measurement points 91 to 98 that are the plurality of measurement points.

Next in Step ST22, a tire approximate linear line that is a regression line obtained as a linear function is determined based on the measurement coordinates C91 to C98 each indicating the coordinate position and obtained in Step ST21. This tire approximate linear line is a straight line indicating the direction of the tire 6.

Then in Step ST23, a roller-tire angular deviation is obtained from an angle formed between the rotation reference direction DK prepared in advance and the tire approximate linear line. FIG. 9 illustrates, as the rotation reference direction DK, a direction in which the front roller 20F and the rear roller 20B are disposed in the rotating platform 32 (a facing direction between the front roller 20F and the rear roller 20B).

Thus, the reference direction in Embodiment 2 is the rotation reference direction DK whose orientation is changed according to a roller rotation operation.

Then in Step ST24, the displacement sensor 8 outputs the angle measurement information S8 indicating the roller-tire angular deviation calculated in Step ST23.

As such, the chassis dynamometer 1B according to Embodiment 2 can determine the roller-tire angular deviation that is an angular displacement, with the distance measurement region 90 (measurement target region) in the tire 6 as a detection target using the displacement sensor 8 having the distance detection function.

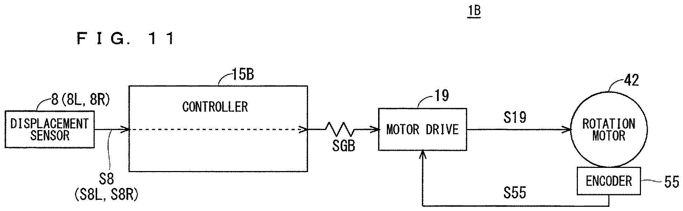

FIG. 11 schematically illustrates a drive system of the rotation motor 42 in the chassis dynamometer 1B according to Embodiment 2.

As illustrated in FIG. 11, the chassis dynamometer 1B further includes a controller 15B that is a roller rotation controller, the motor drive 19, and the encoder 55. The rotation motor 42 in FIG. 11 is a motor to be used for each of the roller rotation mechanisms 3L and 3R.

As illustrated in FIG. 11, the controller 15B receives the angle measurement information S8 from the displacement sensor 8, and determines a steering angle corresponding to the roller-tire angular deviation indicated by the angle measurement information S8. Then, the controller 15B outputs steering angle instruction information SGB indicating the determined steering angle to the motor drive 19. The motor drive 19 outputs, to the rotation motor 42, a driving control signal S19 indicating a roller rotation operation at a relative rotation angle corresponding to the steering angle indicated by the steering angle instruction information SGB. The relative rotation angle is a rotation angle from the current position of the roller rotation mechanism 3 (a current rotation angle). The motor drive 19 receives the encoder information S55 as a feedback signal from the encoder 55. The encoder information S55 includes absolute rotation angles before and after executing the roller rotation operation of the rotation structure 31.

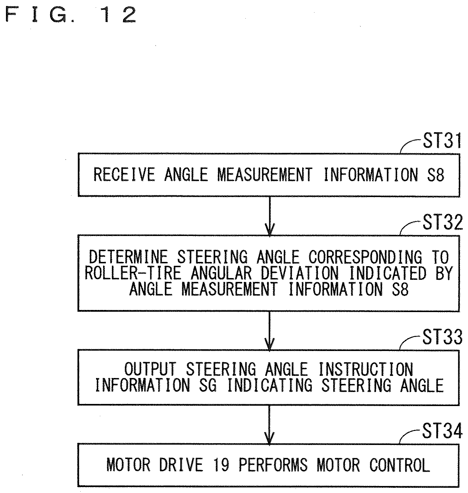

FIG. 12 is a flowchart illustrating a procedure of a method of controlling a rotation of the roller rotation mechanism 3 under control of the controller 15B in the drive system in FIG. 11. Embodiment 2 describes the method of controlling the rotation of the roller rotation mechanism 3 in FIG. 12 as a method of controlling the operation of the vehicle testing apparatus.

With reference to FIG. 12, the controller 15B receives the angle measurement information S8 from the displacement sensor 8 that is a rotating displacement sensor in Step ST31, and determines a steering angle corresponding to the roller-tire angular deviation indicated by the angle measurement information S8.

Then in Step ST32, the controller 15B outputs the steering angle instruction information SGB indicating the steering angle determined in Step ST31 to the motor drive 19.

Next in Step ST33, the motor drive 19 performs motor control of outputting the driving control signal S19 to the rotation motor 42 to cause the roller rotation mechanism 3 to execute the roller rotation operation.

Here, the roller rotation mechanism 3 performs the roller rotation operation so that the rotation structure 31 rotates at the relative rotation angle corresponding to the steering angle indicated by the steering angle instruction information SGB. Thus, the absolute rotation angle of the rotation structure 31 after execution of the roller rotation operation is determined by the latest absolute rotation angle and the relative rotation angle immediately before execution of the roller rotation operation. As described above, the rotation angle of the rotation structure 31 in execution of the roller rotation operation according to Embodiment 2 is a relative rotation angle with respect to the latest rotation angle before execution of the roller rotation operation.

As such, the controller 15B that is the roller rotation controller executes the rotation control processes for performing the method of controlling the rotation in FIG. 12. These rotation control processes are processes for causing the roller rotation mechanism 3 to perform the roller rotation operation so that a geometry between the roller pair 20 and the tire 6 is maintained constant without being angularly deviated.

For example, when the steering operation of the vehicle 60 causes a roller-tire angular deviation X6 between the roller pair 20 and the tire 6 of the vehicle 60, the rotation structure 31 is rotated at a relative rotation angle corresponding to the roller-tire angular deviation X6 indicated by the angle measurement information S8. Consequently, the geometry between the roller pair 20 and the tire 6 is maintained constant as that established before occurrence of the roller-tire angular deviation X6. The roller-tire angular deviation X6 includes a rotation direction.

Specifically, the roller rotation mechanism 3 executes the roller rotation operation so that the rotation reference direction DK defined for the roller pair 20 always matches the tire approximate linear line for the tire 6. In other words, the roller rotation mechanism 3 executes the roller rotation operation so that the roller-tire angular deviation becomes "0".

Since the distance measurement region 90 (measurement target region) in the tire 6 is a detection target for each of the displacement sensor 8 (the displacement sensor 8L + displacement sensor 8R) in the chassis dynamometer 1B according to Embodiment 2, the displacement sensor 8 can determine the roller-tire angular deviation with respect to the rotation reference direction DK as an angular displacement with high accuracy.

In addition, the distance measurement region 90 in the tire 6 is a detection target in the chassis dynamometer 1B according to Embodiment 2, similarly to Embodiment 1. Even when the vehicle 60 to be tested is changed, new information on the tire turning angle of the changed vehicle 60 need not be prepared in advance.

An angle obtained by adding the rotation angle of the roller rotation mechanism 3 to the roller-tire angular deviation is a tire turning angle according to Embodiment 2.

Thus, the chassis dynamometer 1B according to Embodiment 2 does not require advanced preparation on the tire turning angle and can recognize the roller-tire angular deviation as an angular displacement with high accuracy.

Since rotation object sets (the left rotation object set + the right rotation object set) of the roller rotation mechanisms 3 include the displacement sensor 8 that is a rotating displacement sensor in the chassis dynamometer 1B according to Embodiment 2, the roller-tire angular deviation can be directly recognized from the angle measurement information S8 of the displacement sensor 8.

The chassis dynamometer 1B according to Embodiment 2 can cause the roller rotation mechanism 3 to perform the roller rotation operation in synchronization with the roller-tire angular deviation with high accuracy, through the rotation control processes by the controller 15B that is the roller rotation controller so that the geometry between the roller pair 20 and the tire 6 is maintained constant (the roller-tire angular deviation = "0").

Since the displacement sensor 8 is disposed on the rotating platform 32L, a distance from the displacement sensor 8 to the tire 6 is closer than that of the displacement sensor 7 according to Embodiment 1. As the tire angle detection range 38 is a detection range closer to the displacement sensor than that of the tire angle detection range 37, the tire angle detection range 38 is less susceptible to disturbances. Thus, the displacement sensor 8 in Embodiment 2 can increase the accuracy of detecting the angular displacement more than that by the displacement sensor 7 in Embodiment 1.

The chassis dynamometer 1B according to Embodiment 2 can cause the roller rotation mechanism 3 to execute the roller rotation operation of rotating the rotation structure 31 with high accuracy through the rotation control processes by the controller 15B so that the roller-tire angular deviation (angular displacement) becomes constant "0".

The chassis dynamometer 1B according to Embodiment 2 executes the method of obtaining the angle measurement information S8 as a process of computing the angular displacement in FIG. 10. The method of obtaining the angle measurement information S8 includes Steps ST21 to ST24.

The chassis dynamometer 1B according to Embodiment 2 causes the displacement sensor 8 having the distance detection function to execute the process of computing the angular displacement (process of obtaining the angle measurement information S8) in FIG. 10, so that the roller-tire angular deviation can be determined as an angular displacement with high accuracy.

Furthermore, the displacement sensor 8 having the distance detection function can recognize a distance to the tire 6 having the distance measurement region 90, without any special computing process.

As illustrated in FIG. 12, the chassis dynamometer 1B according to Embodiment 2 executes Steps ST31 to ST34 as the method of controlling the rotation of the roller rotation mechanism 3 (the method of controlling the operation of the vehicle testing apparatus). Thus, always maintaining the geometry between the roller pair 20 and the tire 6 constant in the test of the vehicle 60 which involves the tire rotation operation of rotating the tire 6 enables the vehicle 60 to be tested with high accuracy.

Although the displacement sensor 8 in the chassis dynamometer 1B according to Embodiment 2 executes Steps ST21 to ST24 in FIG. 10 so that the angle measurement information S8 indicates the roller-tire angular deviation as a basic aspect, the following modification is conceivable.

In the modification, the process performed by the displacement sensor 8 is limited to partial Step ST21-1 in Step ST21. Here, the angle measurement information S8 indicates the measurement distances L91 to L98.

In the modification, the controller 15B executes partial Step ST21-2 in Step ST21, and Steps ST22 to ST24 in FIG. 10 based on the measurement distances L91 to L98 indicated by the angle measurement information S8 to determine the roller-tire angular deviation, and then executes Steps ST32 and ST33 in FIG. 12.

As such, examples of the conceivable modification of Embodiment 2 include a structure in which process details of the displacement sensor 8 are kept to a minimum and functions of the controller 15B have been extended.

### [Embodiment 3]

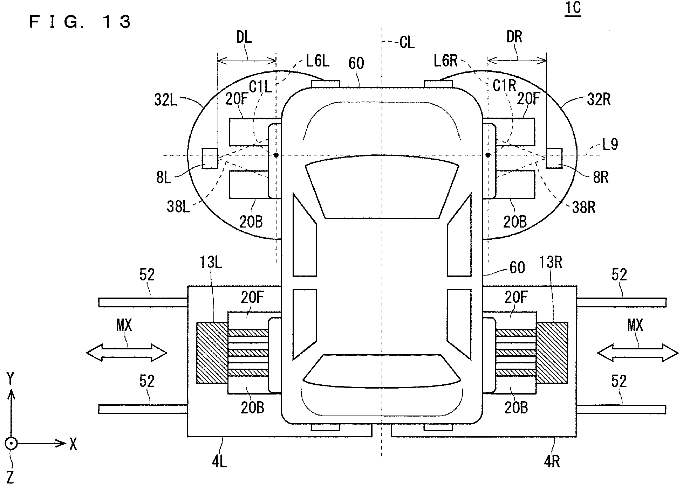

FIG. 13 schematically illustrates a planar structure of a chassis dynamometer 1C according to Embodiment 3. In the chassis dynamometer 1C according to Embodiment 3, front-wheel tires 6 of the vehicle 60 are the first-type tires, and rear-wheel tires are the second-type tires. In Embodiment 3, the chassis dynamometer 1C is used as a vehicle testing apparatus.

The four roller pairs 20 (each with the front roller 20F + the rear roller 20B) are classified into the first-type left rollers on which the front-wheel left tire that is the first-type left tire is placed, the first-type right rollers on which the front-wheel right tire that is the first-type right tire is placed, the second-type left rollers on which the rear-wheel left tire that is the second-type left tire is placed, and the second-type right rollers on which the rear-wheel right tire that is the second-type right tire is placed.

The chassis dynamometer 1C further includes the roller rotation mechanisms 3 for the front-wheel tires 6. The roller rotation mechanisms 3 include the roller rotation mechanism 3L that is the left rotation mechanism, and the roller rotation mechanism 3R that is the right rotation mechanism.

The roller rotation mechanism 3L is the left rotation mechanism that executes a roller rotation operation of rotating the roller pair 20 (the first-type left rollers) on which the front-wheel tire 6L is placed.

The roller rotation mechanism 3R is the right rotation mechanism that executes a roller rotation operation of rotating the roller pair 20 (the first-type right rollers) on which the front-wheel tire 6R is placed.

The center line between the roller rotation mechanism 3L and the roller rotation mechanism 3R is a center line CL. In other words, the roller rotation mechanism 3L and the roller rotation mechanism 3R are disposed symmetric with respect to the center line CL.

In the chassis dynamometer 1C according to Embodiment 3, the distance measurement region 90 (measurement target region) is provided for each of the front-wheel tires 6L and 6R, similarly to Embodiments 1 and 2.

In the chassis dynamometer 1C according to Embodiment 3, the displacement sensor 8L is disposed for the front-wheel tire 6L that is the first-type left tire, and the displacement sensor 8R is disposed for the front-wheel tire 6R that is the first-type right tire.

The chassis dynamometer 1C includes the displacement sensor 8L on the rotating platform 32L of the roller rotation mechanism 3L, and the displacement sensor 8R on the rotating platform 32R of the roller rotation mechanism 3R.

Thus, the chassis dynamometer 1C according to Embodiment 3 includes the first-type left rollers and the displacement sensor 8L as the left rotation object set, and the first-type right rollers and the displacement sensor 8R as the right rotation object set.

When the rotation angle of each of the rotating platforms 32L and 32R is 0° and the rotation reference direction DK in which the front roller 20F faces the rear roller 20B matches the forward direction (Y direction) as illustrated in FIG. 13, the displacement sensors 8L and 8R are disposed symmetric with respect to the center line CL. Hereinafter, a state where the rotation reference direction DK matches the Y direction may be simply referred to as a "forward-direction setting state for the roller pair 20".

The displacement sensors 8L and 8R are disposed on a lateral disposition line L9 in the chassis dynamometer 1C in FIG. 13. The lateral disposition line L9 is a line that passes through a left-rotation center C1L of the roller pair 20 as the first-type left rollers, and a right-rotation center C1R of the roller pair 20 as the first-type right rollers.

The displacement sensor 8L that is a left displacement sensor detects a left-tire distance DL to the tire 6L placed on the roller pair 20 as the first-type left rollers, using the distance measurement region 90 (a left measurement target region) in the front-wheel tire 6L as a detection target to obtain distance measurement information S18L as left distance measurement information. In other words, the distance measurement information S18L indicates the left-tire distance DL.

The displacement sensor 8L determines the left-tire distance DL, based on a plurality of measurement distances with the distance detection function of the displacement sensor 8L. The easiest conceivable method is to assume one of the measurement distances to be the left-tire distance DL. The measurement distances correspond to the measurement distances L91 to L98 described with reference to FIG. 5.

Similarly, the displacement sensor 8R that is a right displacement sensor detects a right-tire distance DR to the tire 6R placed on the roller pair 20 as the first-type right rollers, using the distance measurement region 90 (a right measurement target region) in the front-wheel tire 6R as a detection target to obtain distance measurement information S18R as right distance measurement information. In other words, the distance measurement information S18R indicates the right-tire distance DR.

The displacement sensor 8R determines the right-tire distance DR, based on a plurality of measurement distances with the distance detection function of the displacement sensor 8R. The easiest conceivable method is to assume one of the measurement distances to be the right-tire distance DR. The measurement distances correspond to the measurement distances L91 to L98 described with reference to FIG. 5. When a measurement distance L9i to a measurement point 9i (i = one of 1 to 8) is used as the left-tire distance DL, the measurement distance L9i to the measurement point 9i needs to be used as the right-tire distance DR. In other words, a distance measurement point of the tire 6L for the displacement sensor 8L needs to match a distance measurement point of the tire 6R for the displacement sensor 8R.

Here, the distance measurement region 90 in the tire 6L is the left measurement target region. Similarly, the distance measurement region 90 in the tire 6R is the right measurement target region.

The chassis dynamometer 1C according to Embodiment 3 further includes a vehicle restraint jig 13L that is a left vehicle restraint device, and a vehicle restraint jig 13R that is a right vehicle restraint device.

The left vehicle restraint jig 13L is provided for the rear-wheel tire 6L as the second-type left tire to rotatably fix the rear-wheel tire 6L. The vehicle restraint jig 13R is provided for the rear-wheel tire 6R as the second-type right tire to rotatably fix the rear-wheel tire 6R. The vehicle restraint jigs 13L and 13R are existing devices.

A lateral transfer mechanism 4L that is a left transfer mechanism executes a left transfer process of transferring a left transfer object set including the roller pair 20 as the second-type left rollers and the vehicle restraint jig 13L as the left vehicle restraint device, in a lateral direction MX along a width direction (a tread direction) of the vehicle 60. The lateral direction MX in FIG. 13 matches the X direction. In other words, the X direction is a direction identical to the width direction (lateral direction) of the vehicle 60 in which the tire 6 is disposed on the roller pair 20.

A lateral transfer mechanism 4L that is a right transfer mechanism executes a right transfer process of transferring, in the lateral direction MX, a right transfer object set including the roller pair 20 as the second-type right rollers and the vehicle restraint jig 13R as the right vehicle restraint device.

Hereinafter, the lateral transfer mechanisms 4L and 4R may be collectively referred to as a "lateral transfer mechanism 4". The vehicle restraint jigs 13L and 13R may be collectively referred to as a "vehicle restraint jig 13". The second-type left rollers and the second-type left roller may be collectively simply referred to as the "roller pair 20".

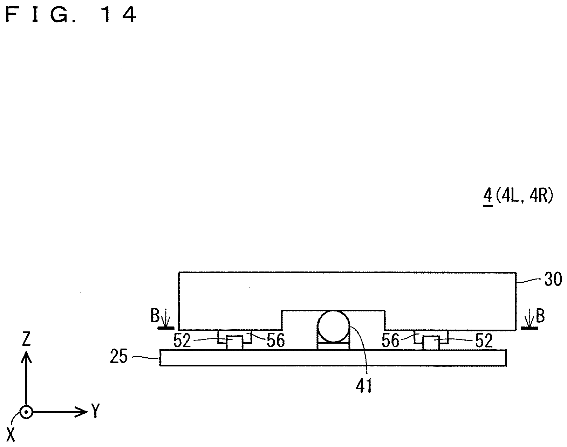

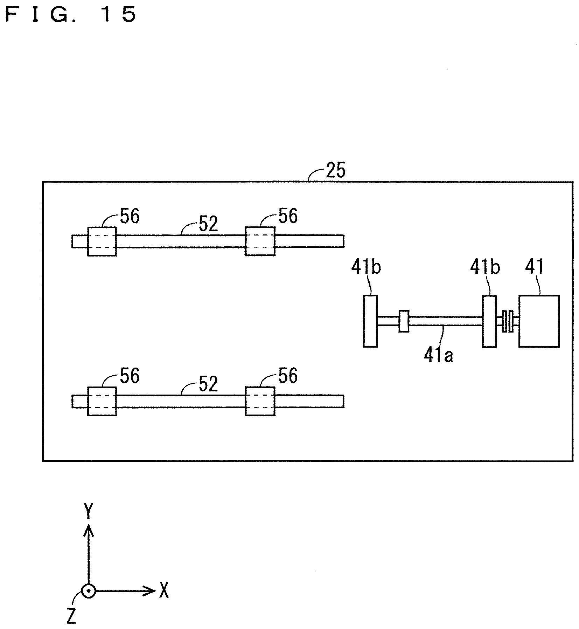

FIG. 14 is a front view illustrating a structure of the lateral transfer mechanism 4. FIG. 15 is a top view of the lateral transfer mechanism 4 in FIG. 14 when viewed from above (+ Z direction). FIG. 15 omits the illustration of a mobile cart 30. Each of FIGS. 14 and 15 illustrates the XYZ rectangular coordinate system. The structure of the lateral transfer mechanism 4 in FIGS. 14 and 15 is a structure common to the lateral transfer mechanisms 4L and 4R.

As illustrated in FIGS. 14 and 15, the lateral transfer mechanism 4 includes, as main constituent elements, a base 25, a pair of rails 52, a plurality of guides 56, a driving motor 41, and the mobile cart 30. The vehicle restraint jig 13 and the roller pair 20, which are not illustrated in FIG. 14, are fixedly disposed on the mobile cart 30.

As illustrated in FIG. 15, the pair of rails 52 are aligned parallel to each other in the X direction on the base 25. Each of the rails 52 includes the plurality of guides 56 (two guides 56 in FIG. 15). As illustrated in FIG. 14, the mobile cart 30 is fixed on the upper surfaces of the guides 56.

As illustrated in FIGS. 14 and 15, the driving motor 41 is disposed on the base 25. The driving motor 41 functions as a power source that causes a rotation axis 41a to rotate and transfers the mobile cart 30. The rotation axis 41a is rotatably supported by a pair of support bearings 41b.

Thus, the lateral transfer mechanism 4 can execute transfer processes (the left transfer process + the right transfer process) of transferring the mobile cart 30 with the driving motor 41 in the lateral direction MX. Here, the pair of rails 52 and the plurality of guides 56 guide the mobile cart 30 so that the mobile cart 3 is accurately transferred in the lateral direction MX (X direction).

Restraint of the rear-wheel tire 6L by the vehicle restraint jig 13L and restraint of the rear-wheel tire 6R by the vehicle restraint jig 13R do not cause the vehicle 60 to move forward or backward (produce thrust) or roll during execution of the transfer processes in the lateral direction MX.

The roller pair 20 and the vehicle restraint jig 13 as a transfer object set disposed on the mobile cart 30 move along the X direction in synchronization with the movement of the mobile cart 30.

Thus, the chassis dynamometer 1C according to Embodiment 3 causes the lateral transfer mechanism 4 to execute the transfer process while the rear-wheel tire 6 is restrained by the vehicle restraint jig 13. The transfer processes by the lateral transfer mechanisms 4 include the left transfer process by the lateral transfer mechanism 4L and the right transfer process by a lateral transfer mechanism 4R.

Here, the lateral transfer mechanism 4L and the lateral transfer mechanism 4R simultaneously perform the left transfer process and the right transfer process, respectively, so that the transfer direction and the transfer amount of the left transfer process completely match those of the right transfer process. Consequently, the vehicle 60 laterally moves in the transfer direction and with the transfer amount of the lateral transfer mechanisms 4.

Thus, the lateral transfer mechanisms 4 including the lateral transfer mechanisms 4L and 4R can transfer the vehicle 60 in the lateral direction MX through the transfer processes (the left transfer process + the right transfer process) of transferring the mobile cart 30 with the driving motor 41 in the lateral direction MX. Thus, the front-wheel tires 6L and 6R also laterally move.

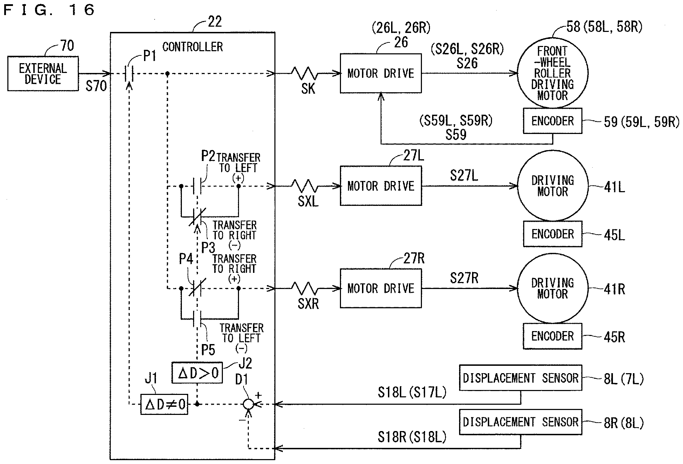

FIG. 16 schematically illustrates a drive system of various motors in the chassis dynamometer 1C according to Embodiment 2. The motors to be driven include front-wheel roller driving motors 58 and the driving motors 41.

The front-wheel roller driving motors 58 include front-wheel roller driving motors 58L and 58R. The front-wheel roller driving motor 58L is a motor for rotationally driving the roller pair 20 as the first-type left rollers. The front-wheel roller driving motor 58R is a motor for rotationally driving the roller pair 20 as the first-type right rollers.

The driving motors 41 include driving motors 41L and 41R. The driving motor 41L is a motor to be used in the lateral transfer mechanism 4L. The driving motor 41R is a motor to be used in the lateral transfer mechanism 4R.

As illustrated in FIG. 16, the chassis dynamometer 1C further includes a controller 22 that is a transfer process controller, motor drives 26 and 27, and encoders 59 and 45.

The motor drives 26 include motor drives 26L and 26R. The motor drive 26L is a device that drives the front-wheel roller driving motor 58L. The motor drive 26R is a device that drives the front-wheel roller driving motor 58R.

The motor drives 27 include motor drives 27L and 27R. The motor drive 27L is a device that drives the driving motor 41L. The motor drive 27R is a device that drives the driving motor 41R. The driving motor 41L corresponds to the driving motor 41 in FIG. 14 in the lateral transfer mechanism 4L. The driving motor 41R corresponds to the driving motor 41 in FIG. 14 in the lateral transfer mechanism 4R.

Upon receipt of a centering command signal S70 from an external device 70 which instructs start of executing centering alignment processing, the controller 22 starts the centering alignment processing. The centering alignment processing is vehicle position alignment processing of aligning the position of the vehicle 60 in the width direction so that position alignment conditions are satisfied.

As described above, the roller rotation mechanism 3L and the roller rotation mechanism 3R are disposed symmetric with respect to the center line CL.

Furthermore, each of the roller rotation mechanisms 3L and 3R is set to the forward-direction setting state for the roller pair 20 during execution of the centering alignment processing. Thus, the displacement sensors 8L and 8R are disposed symmetric with respect to the center line CL during execution of the centering alignment processing.

The position alignment conditions are conditions for placing the front-wheel tires 6L and 6R of the vehicle 60 symmetric with respect to the center line CL that is the center line between the roller rotation mechanism 3L and the roller rotation mechanism 3R. The details of the centering alignment processing under control of the controller 22 will be described hereinafter.

As illustrated in FIG. 16, the controller 22 receives the distance measurement information S18L (left distance measurement information) from the displacement sensor 8L, and receives the distance measurement information S18R (right distance measurement information) from the displacement sensor 8R.

FIG. 16 schematically illustrates control details of the controller 22. The controller 22 includes operating conditions J1 and J2, and operating contacts P1 to P5.

The controller 22 compares the left-tire distance DL indicated by the distance measurement information S18L with the right-tire distance DR indicated by the distance measurement information S18R to determine a differential distance Δ obtained by subtracting the right-tire distance DR from the left-tire distance DL. Zeroing the differential distance Δ satisfies the position alignment conditions.

When the differential distance ΔD indicate a positive value (ΔD > 0), the (operating) condition J2 is satisfied. Thus, the controller 22 validates the contacts P2 and P5 and invalidates the contacts P3 and P4 among the contacts P2 to P5. Thus, the controller 22 outputs, to the motor drive 27L, lateral transfer instruction information SXL indicating transfer in the left direction with a transfer amount MD (= the differential distance ΔD/2), and outputs, to the motor drive 27R, lateral transfer instruction information SXR indicating transfer in the left direction with the transfer amount MD.

The motor drive 27L outputs, to the driving motor 41L, a driving control signal S27L indicating a transfer operation in the left direction with the transfer amount MD. An encoder 45L is provided for detecting details on driving the driving motor 41L.

The motor drive 27R outputs, to the driving motor 41R, a driving control signal S27R indicating a transfer operation in the left direction with the transfer amount MD. An encoder 45R is provided for detecting details on driving the driving motor 41R.

Thus, driving the driving motor 41L using the driving control signal S27L transfers the mobile cart 30 of the lateral transfer mechanism 4L in the left direction with the transfer amount MD. Similarly, driving the driving motor 41R using the driving control signal S27R transfers the mobile cart 30 of the lateral transfer mechanism 4R in the left direction with the transfer amount MD.

Consequently, transferring the left transfer object set (the roller pair 20 and the vehicle restraint jig 13L) and the right transfer object set (the roller pair 20 and the vehicle restraint jig 13R) in the left direction transfers the entirety of the vehicle 60 in the left direction with the transfer amount MD. Thus, the front-wheel tires 6L and 6R also move in the left direction with the transfer amount MD.

When the differential distance ΔD indicate a negative value (ΔD < 0), the condition J2 is not satisfied. Thus, the controller 22 invalidates the contacts P2 and P5 and validates the contacts P3 and P4 among the contacts P2 to P5. Thus, the controller 22 outputs, to the motor drive 27L, the lateral transfer instruction information SXL indicating transfer in the right direction with a transfer amount MD (= the differential distance |ΔD/2|), and outputs, to the motor drive 27R, the lateral transfer instruction information SXR indicating transfer in the right direction with the transfer amount MD.

The motor drive 27L outputs, to the driving motor 41L, the driving control signal S27L indicating a transfer operation in the right direction with the transfer amount MD. Similarly, the motor drive 27R outputs, to the driving motor 41R, the driving control signal S27R indicating a transfer operation in the right direction with the transfer amount MD.

Thus, driving the driving motor 41L using the driving control signal S27L transfers the mobile cart 30 of the lateral transfer mechanism 4L in the right direction with the transfer amount MD. Similarly, driving the driving motor 41R using the driving control signal S27R transfers the mobile cart 30 of the lateral transfer mechanism 4R in the right direction with the transfer amount MD.

Consequently, transferring the left transfer object set (the roller pair 20 and the vehicle restraint jig 13L) and the right transfer object set (the roller pair 20 and the vehicle restraint jig 13R) in the right direction transfers the entirety of the vehicle 60 in the right direction with the transfer amount MD. Thus, the front-wheel tires 6L and 6R also move in the right direction with the transfer amount MD.

When the differential distance ΔD does not indicate "0", the condition J1 holds. Here, the controller 22 validates the contact P1, and outputs motor rotation instruction information SK to the motor drives 26.

The motor drive 26L executes a rotation operation of the roller pair 20 as the first-type left rollers with the rotation amount instructed by the motor rotation instruction information SK. The motor drive 26L monitors operation details of the front-wheel roller driving motor 58L through the encoder 59L. Consequently, the motor drive 26L can operate the front-wheel roller driving motor 58L so that the roller pair 20 that rotates with the rotation amount instructed by the motor rotation instruction information SK performs the rotation operation.

The motor drive 26R executes a rotation operation of the roller pair 20 as the first-type right rollers with the rotation amount instructed by the motor rotation instruction information SK. The motor drive 26R monitors operation details of the front-wheel roller driving motor 58R through the encoder 59R. Consequently, the motor drive 26R can operate the front-wheel roller driving motor 58R so that the roller pair 20 that rotates with the rotation amount instructed by the motor rotation instruction information SK performs the rotation operation.

As such, output of the motor rotation instruction information SK to the motor drives 26 by the controller 22 enables additional execution of roller driving processes of rotating the roller pair 20 as the first-type left rollers and the roller pair 20 as the first-type right rollers at respective constant rotation speeds.

The rotation operation of the roller pair 20 as the first-type left rollers is an operation of forcibly rotating the front-wheel tire 6L of the vehicle 60. The rotation operation of the roller pair 20 as the first-type right rollers is an operation of forcibly rotating the front-wheel tire 6R of the vehicle 60. Here, the front wheels of the vehicle 60 are set to neutral.

When the differential distance ΔD indicates "0", neither the condition J1 nor the condition J2 is satisfied. Thus, the controller 22 substantially invalidates all the contacts P1 to P5, and instructs operation termination (an operating quantity "0") of the motor rotation instruction information SK, the lateral transfer instruction information SXL, and the lateral transfer instruction information SXR, which are to be output from the controller 22.

Upon receipt of the distance measurement information S18L and the distance measurement information S18R, the controller 22 executes the centering alignment processing that is the vehicle position alignment processing. The centering alignment processing is processing that causes the lateral transfer mechanism 4L to execute the left transfer process and causes the lateral transfer mechanism 4R to execute the right transfer process so that the position alignment conditions are satisfied. Here, the position alignment conditions are conditions under which the left-tire distance DL matches the right-tire distance DR, that is, the differential distance ΔD indicates "0".

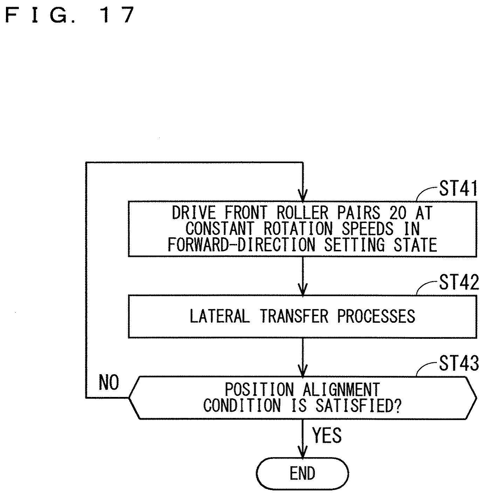

FIG. 17 is a flowchart illustrating a procedure of the centering alignment processing under control of the controller 22 in the drive system in FIG. 16.

As described above, when the external device 70 gives the centering command signal S70 that instructs start of executing the centering alignment processing, the centering alignment processing in FIG. 17 is executed under control of the controller 22.

Completion of positioning the vehicle 60 in the forward and backward direction as illustrated in FIG. 13 is a prerequisite prior to execution of the centering alignment processing. Thus, the rotation center points of the front-wheel tires 6L and 6R exist on the lateral disposition line L9. The vehicle 60 can be positioned in the forward and backward direction relatively easily by manually operating the vehicle 60.

The centering alignment processing is the vehicle position alignment processing of disposing the vehicle 60 in a position at which the tires 6L and 6R that are the first-type tires are symmetric with respect to the center line CL (see FIG. 1).

Thus, performing a driving test predominantly based on driving the vehicle 60 straight using the chassis dynamometer 1C according to Embodiment 3 can optimize the driving test.

The details of processes of the centering alignment processing to be automatically performed under control of the controller 22 will be described hereinafter with reference to FIG. 17.

First, in Step ST41, each of the roller rotation mechanisms 3L and 3R is fixed at a rotation angle of 0° to implement the forward-direction setting state for the roller pair 20. Then, execution of the roller driving processes under control of the controller 22 drives the front-wheel right and left roller pairs 20 as the first-type left rollers and the first-type right rollers at respective constant rotation speeds.

During execution of the centering alignment processing, concurrent execution of the roller driving processes of rotating the roller pairs 20 as the first-type left rollers and the first-type right rollers forcibly rotates the front-wheel tires 6L and 6R of the vehicle 60 at the constant rotation speeds.

Output of the motor rotation instruction information SK from the controller 22 to the motor drives 26 executes the roller driving processes in Step ST41.

Next in Step ST42, the lateral transfer mechanism 4 execute the lateral transfer processes while the vehicle restraint jigs 13L and 13R provided for the rear-wheel tires 6L and 6R as the second-type tires restrain the vehicle 60. The lateral transfer processes by the lateral transfer mechanisms 4 include the left transfer process by the lateral transfer mechanism 4L and the right transfer process by the lateral transfer mechanism 4R.

Output of the lateral transfer instruction information SXL to the motor drive 27L and output of the lateral transfer instruction information SXR to the motor drive 27R execute the processes in Step ST42.

Then in Step ST43, whether a position control condition {the differential distance ΔD = 0) is satisfied (YES) or not (NO) is determined.

If "YES" in Step ST43, the centering alignment processing ends. If "NO", the process returns to Step S41. Then, Steps ST41 and ST42 are repeated until "YES" is obtained in Step ST43.

When the centering alignment processing ends, the vehicle 60 is positioned on the chassis dynamometer 1C so that the front-wheel tires 6L and 6R are disposed symmetric with respect to the center line CL.

As such, the chassis dynamometer 1C according to Embodiment 3 can automatically perform the centering alignment processing under control of the controller 22.

This allows execution of the automatic centering alignment processing in a relatively short period of time, without exacting work such as visually checking the position of the vehicle 60, e.g., a manual positioning process on the vehicle 60 through a steering operation by the driver.

Execution of the centering alignment processing causes a slight lateral displacement in a geometry between the roller pair 20 closer to the front wheel and the roller pair 20 closer to the rear wheel. However, the chassis dynamometer 1C, which has a structure in which the transfer amount MD is sufficiently smaller than a width of the roller pair 20 and the roller rotation mechanism 3 is not provided for the rear wheels, does not interfere with the test on the vehicle 60.

The chassis dynamometer 1C according to Embodiment 3 can satisfy the position control condition {the differential distance ΔD = 0) through the centering alignment processing as the vehicle position alignment processing under control of the controller 22.

Thus, the chassis dynamometer 1C according to Embodiment 3 can automatically position the front-wheel tire 6L as the first-type left tire and the front-wheel tire 6R as the first-type right tire in the lateral direction (X direction) so that the front-wheel tires 6L and 6R are symmetric across the center line CL.

Furthermore, the controller 22 in the chassis dynamometer 1C according to Embodiment 3 executes the roller driving processes concurrently with the centering alignment processing to allow the entirety of the vehicle 60 including the front-wheel tires 6L and 6R to transfer in the lateral direction MX during execution of the centering alignment processing.

Although the chassis dynamometer 1C according to Embodiment 3 adopts the displacement sensors 8L and 8R according to Embodiment 2 as the left displacement sensor and the right displacement sensor, the chassis dynamometer 1C may adopt the displacement sensors 7L and 7R according to Embodiment 1 as the left displacement sensor and the right displacement sensor. Obviously, the chassis dynamometer 1C may adopt any sensors that can obtain (the right and left) distance measurement information, instead of the displacement sensors 7 and 8.

Here, the displacement sensor 7L outputs distance measurement information S 17L indicating the left-tire distance DL obtained through the distance detection function. The displacement sensor 7R outputs distance measurement information S17R indicating the right-tire distance DR obtained through the distance detection function. Thus, the controller 22 uses the distance measurement information S17L and the distance measurement information S17R, instead of the distance measurement information S18L and the distance measurement information S18R.

Although the first-type tires are the front-wheel tires and the second-type tires are the rear-wheel tires in Embodiment 3, a modification in which the first-type tires are the rear-wheel tires, the second-type tires are the front-wheel tires, the lateral transfer mechanisms 4 and the vehicle restraint jigs 13 are disposed closer to the front wheels, and the roller rotation mechanisms 3 and the displacement sensors 8 are disposed closer to the rear wheels is possible.

### [Others]

Although Embodiments above describe the chassis dynamometers 1, 1B, and 1C as the vehicle testing apparatuses, the vehicle testing apparatuses are not limited to chassis dynamometers. For example, a free roller testing apparatus may be used as a vehicle testing apparatus instead of the chassis dynamometer 1 (1B or 1C). The free roller testing apparatus is an apparatus that applies acceleration and deceleration loads to the vehicle 60 only with the weight of the roller pairs 20, and is an apparatus that does not convey the power to the roller pairs 20. Thus, the free roller testing apparatus has no motor that applies a load to the roller pairs 20, unlike the chassis dynamometers.

Thus, the vehicle testing apparatuses according to the present disclosure include the chassis dynamometers and the free roller testing apparatus. The processes in Step ST41 in FIG. 17 are not executed when the free roller testing apparatus is used as the vehicle testing apparatus.

Although Embodiments above describe the roller pair 20 with a twin-roller structure as rollers on which the tire 6 of the vehicle 60 is placed, a discrete roller with a single roller structure may be used instead of the roller pair 20.

Embodiment 1 and Embodiment 2 describe the displacement sensor 7 and the displacement sensor 8, respectively, as displacement sensors each obtaining the angle measurement information. Obviously, any sensors that can obtain the distance measurement information may be used instead of the displacement sensors 7 and 8.

Embodiments of this disclosure can be freely combined or appropriately modified and omitted within the scope of the disclosure.

Although the present disclosure is described in detail, the foregoing description is in all aspects illustrative and not restrictive of the disclosure. Therefore, numerous modifications and variations that have not yet been exemplified can be devised without departing from the scope of the present disclosure.

### EXPLANATION OF REFERENCE SIGNS

1, 1B, 1C chassis dynamometer
3, 3L, 3R roller rotation mechanism
4, 4L, 4R lateral transfer mechanism
6, 6L, 6R tire
7, 7L, 7R, 8, 8L, 8R displacement sensor
9, 91 to 98 measurement point
13, 13L, 13R vehicle restraint jig
15, 15B, 22 controller
19 motor drive
20 roller pair
20B rear roller
20F front roller
26, 26L, 26R, 27, 27L, 27R motor drive
32, 32L, 32R rotating platform
41, 41L, 41R driving motor
42 rotation motor
58, 58L, 58R front-wheel roller driving motor
60 vehicle
90 measurement target region

## Claims

1. A vehicle testing apparatus, comprising:
a roller on which a tire of a vehicle is placed;
a roller rotation mechanism executing a roller rotation operation of rotating a rotation object set including the roller; and
a displacement sensor detecting an angular displacement on a tire turning angle, using a measurement target region in the tire as a detection target to obtain angle measurement information, the tire turning angle being an angle with respect to a reference direction of the tire.

2. The vehicle testing apparatus according to claim 1,
wherein the displacement sensor includes a fixed displacement sensor fixedly disposed in a non-moving position when the roller rotation mechanism executes the roller rotation operation.

3. The vehicle testing apparatus according to claim 1,
wherein the displacement sensor includes a rotating displacement sensor included in the rotation object set.

4. The vehicle testing apparatus according to any one of claims 1 to 3, further comprising
a roller rotation controller executing a rotation control process based on the angle measurement information,
wherein the rotation control process is a process of causing the roller rotation mechanism to execute the roller rotation operation so that a geometry between the roller and the tire is maintained constant without being angularly deviated.

5. The vehicle testing apparatus according to any one of claims 1 to 4,
wherein a plurality of measurement points are provided in the measurement target region,
the displacement sensor has a distance detection function of detecting distances to the plurality of measurement points to obtain a plurality of measurement distances, and
the displacement sensor executes a process of computing the angular displacement to obtain the angle measurement information,
the process of computing the angular displacement comprising the steps of:
(a) determining, based on the plurality of measurement distances, a plurality of measurement coordinates indicating coordinate positions of the plurality of measurement points on a plane;
(b) determining, from the plurality of measurement coordinates, a tire approximate linear line for approximating an orientation of the tire;
(c) determining, as the angular displacement, an angle between the tire approximate linear line and the reference direction; and
(d) obtaining the angle measurement information indicating the angular displacement.

6. A vehicle testing apparatus comprising at least one roller on which at least one tire of a vehicle is placed,
the at least one tire including front-wheel tires and rear-wheel tires, one of the front-wheel tires and the rear-wheel tires being defined as first-type tires, and the other of the front-wheel tires and the rear-wheel tires being defined as second-type tires,
the first-type tires including a first-type left tire and a first-type right tire that are disposed at both sides,
the second-type tires including a second-type left tire and a second-type right tire that are disposed at both sides,
the at least one roller including a first-type left roller on which the first-type left tire is placed, a first-type right roller on which the first-type right tire is placed, a second-type left roller on which the second-type left tire is placed, and a second-type right roller on which the second-type right tire is placed,
the vehicle testing apparatus further comprising:
a left rotation mechanism executing a roller rotation operation of rotating the first-type left roller;
a right rotation mechanism executing a roller rotation operation of rotating the first-type right roller;
a left displacement sensor detecting a left-tire distance to the first-type left tire, using a left measurement target region in the first-type left tire as a detection target to obtain left distance measurement information;
a right displacement sensor detecting a right-tire distance to the first-type right tire, using a right measurement target region in the first-type right tire as a detection target to obtain right distance measurement information;
a left vehicle restraint device rotatably fixing the second-type left tire;
a right vehicle restraint device rotatably fixing the second-type right tire;
a left transfer mechanism executing a left transfer process of transferring, in a lateral direction along a width direction of the vehicle, a left transfer object set including the second-type left roller and the left vehicle restraint device;
a right transfer mechanism executing a right transfer process of transferring, in the lateral direction, a right transfer object set including the second-type right roller and the right vehicle restraint device; and
a transfer process controller executing vehicle position alignment processing upon receipt of the left distance measurement information and the right distance measurement information,
wherein the vehicle position alignment processing is processing causing the left transfer mechanism to execute the left transfer process and causing the right transfer mechanism to execute the right transfer process so that the left-tire distance and the right-tire distance satisfy a position alignment condition,
the left transfer mechanism and the right transfer mechanism are disposed symmetric with respect to a center line, and the left displacement sensor and the right displacement sensor are disposed symmetric with respect to the center line when the transfer process controller executes the vehicle position alignment processing, and
the position alignment condition is a condition under which the left-tire distance matches the right-tire distance.

7. The vehicle testing apparatus according to claim 6,
wherein the transfer process controller further executes roller driving processes of rotating the first-type left roller and the first-type right roller at respective constant rotation speeds.

8. A method of controlling an operation of a vehicle testing apparatus,
the vehicle testing apparatus including the vehicle testing apparatus according to claim 2, the method comprising the steps of:
(a) receiving the angle measurement information from the fixed displacement sensor;
(b) obtaining the tire turning angle as the angular displacement from the angle measurement information; and
(c) causing the roller rotation mechanism to execute the roller rotation operation so that the roller rotates at a rotation angle matching the tire turning angle.

9. A method of controlling an operation of a vehicle testing apparatus,
the vehicle testing apparatus including the vehicle testing apparatus according to claim 3, the method comprising the steps of:
(a) receiving the angle measurement information from the rotating displacement sensor;
(b) obtaining, from the angle measurement information, a roller-tire angular deviation that is an angular deviation in a geometry between the roller and the tire; and
(d) causing the roller rotation mechanism to execute the roller rotation operation so that the roller-tire angular deviation becomes "0".
